# EUROPEAN PATENT APPLICATION

(11) **EP 4 592 203 A1**
(43) Date of publication of application: **30.07.2025**
(21) Application number: 23867260.4
(22) Date of filing: 01.09.2023
(51) Int. Cl.: B65B 3/30, B67C 3/28

(54) **BIOLOGICAL AGENT QUANTITATIVE DISPENSING DEVICE AND DISPENSING METHOD**

(30) Priority: 19.09.2022 CN 202211139803
(71) Applicant: Shenzhen Cellbri Bio-Innovation Technology Co., Ltd., Shenzhen, Guangdong 518107 (CN)
(72) Inventor: GUO, Xiaoliang, Shenzhen, Guangdong 518107 (CN); HE, Jiawei, Shenzhen, Guangdong 518107 (CN); SHANG, Yuanfang, Shenzhen, Guangdong 518107 (CN); LI, Bo, Shenzhen, Guangdong 518107 (CN); HUANG, Minzhong, Shenzhen, Guangdong 518107 (CN); MI, Xianwu, Shenzhen, Guangdong 518107 (CN)
(74) Representative: Herrero & Asociados, S.L.
(86) International application number: PCT/CN2023/116549
(87) International publication number: WO 2024/060969

(57) **Abstract**

The present disclosure relates to the field of biopharmaceutical technology and provides a quantitative dispensing device and method for biological agents. The quantitative dispensing device includes a storage container, a dispensing container, a first non-contact sensor, and a second non-contact sensor. The biological agents are stored in the storage container. A liquid inlet of the dispensing container communicates with a liquid outlet of the storage container through a delivery tube. Both the first and second non-contact sensors are arranged on the delivery tube between the liquid inlet of the dispensing container and the liquid outlet of the storage container and are separated by a preset distance. By arranging the first and second non-contact sensors on the delivery tube between the liquid inlet of the dispensing container and the liquid outlet of the storage container, non-contact quantitative dispensing of the biological agents can be achieved, effectively enhancing the dispensing efficiency and accuracy of the biological agents.

## Description

This application claims priority to the Chinese patent application No. 2022111398036, titled "Quantitative Dispensing Device and Method for Biological Agents", filed on September 19, 2022, the entire contents of which are hereby incorporated by reference

### TECHNICAL FIELD

The present disclosure relates to the field of biopharmaceutical technology, and more particularly, to a quantitative dispensing device and quantitative dispensing method for biological agents.

### BACKGROUND

Dispensing of biological agents is an important component of the biomedical technology field and is crucial for cell therapy and pharmaceutical preparation. During the dispensing of the biological agents, in order to avoid contamination, electronic components such as sensors which may be in direct contact with the biological agents are not used, causing the dispensing of the biological agents to be difficult.

In related technologies, the dispensing of the biological agents is mainly achieved through weighing and manual recording. Although this method can achieve quantitative dispensing of the biological agents, the dispensing efficiency and accuracy are both relatively low.

### SUMMARY OF THE DISCLOSURE

The present disclosure provides a quantitative dispensing device for biological agents, which aims to overcome at least one technical defect in the existing technology, enables non-contact quantitative dispensing of the biological agents, and effectively improves the dispensing efficiency and accuracy of the biological agents.

The present disclosure further provides a quantitative dispensing method for biological agents.

The quantitative dispensing device for biological agents provided in the present disclosure includes:
a storage container with biological agents stored therein;
a dispensing container having a liquid inlet communicating with a liquid outlet of the storage container through a delivery tube; and
a first non-contact sensor and a second non-contact sensor arranged on the delivery tube and located between the liquid inlet of the dispensing container and the liquid outlet of the storage container, and the first non-contact sensor and the second non-contact sensor being separated by a preset distance.

In some embodiments, a quantifier is arranged on the delivery tube between the first non-contact sensor and the second non-contact sensor.

In some embodiments, the quantifier includes a main body; a flow guide tube is arranged inside in the quantifier, the flow guide tube extends along a preset path, and a length of the preset path is greater than a distance between an inlet and and an outlet of the flow guide tube.

In some embodiments, the flow guide tube is arranged around a center line of the main body and communicates with the delivery tube.

In some embodiments, a cross-sectional area of the flow guide tube is equal to a cross-sectional area of the delivery tube.

In some embodiments, the delivery tube between the first non-contact sensor and the second non-contact sensor is arranged spirally for extending a circulation path of the delivery tube.

In some embodiments, the quantitative dispensing device further includes a pumping member for supplying a delivery power to the delivery tube, and the pumping member is arranged on any one of the delivery tube, the storage container, and the dispensing container.

In some embodiments, a plurality of the dispensing containers are provided, the dispensing containers are arranged in parallel, and a switch valve is arranged on the delivery tube between the liquid inlet of each dispensing container and the liquid outlet of the storage container.

The quantitative dispensing method for biological agents provided in the present disclosure includes:
obtaining a first bubble detection signal of the biological agents in a delivery tube detected by a first non-contact sensor;
obtaining a second bubble detection signal of the biological agents in the delivery tube detected by a second non-contact sensor;
calculating a time difference between the first bubble detection signal and the second bubble detection signal;
obtaining an actual volume flow rate of the biological agents in the delivery tube through a relationship between the time difference and a volume of the delivery tube between the first non-contact sensor and the second non-contact sensor; and
controlling a flow time of the biological agents in the delivery tube to achieve quantitative dispensing of the biological agents.

In some embodiments, in the controlling a flow time of the biological agents in the delivery tube to achieve quantitative dispensing of the biological agents, an on-off time of a switch valve arranged at the liquid inlet of each dispensing container is controlled under a preset flow rate of a peristaltic pump.

According to the quantitative dispensing device for biological agents provided in the embodiments of the present disclosure, with the first non-contact sensor and the second non-contact sensor arranged on the delivery tube and located between the liquid inlet of the dispensing container and the liquid outlet of the storage container, given the volume of the delivery tube between the first non-contact sensor and the second non-contact sensor, the volume flow rate of the biological agents in the delivery tube between the first non-contact sensor and the second non-contact sensor, that is, the actual flow rate of the biological agents in the delivery tube, can be obtained by detecting and calculating the time difference between the time at which the biological agents pass by the first non-contact sensor and the time at which the biological agents pass by the second non-contact sensor. Thus, by controlling the flow time of the biological agents in the delivery tube, the quantitative dispensing of the biological agents can be achieved, that is, the quantitative dispensing of the biological agents can be achieved.

### BRIEF DESCRIPTION OF THE DRAWINGS

To illustrate the technical solutions in this invention or the prior art more clearly, a brief introduction to the drawings required for describing the embodiments or prior art will be provided below. It is evident that the drawings described below are some embodiments of this invention. For those skilled in the art, other drawings can be obtained based on these drawings without requiring creative effort.
FIG. 1 is a schematic view of a quantitative dispensing device for biological agents in accordance with an embodiment of the present disclosure;
FIG. 2 is a schematic view of a quantifier in the quantitative dispensing device for biological agents in accordance with an embodiment of the present disclosure;
FIG. 3 is a cross-sectional view of the quantifier in accordance with an embodiment of the present disclosure; and
FIG. 4 is a flowchart of a quantitative dispensing method for biological agents in accordance with an embodiment of the present disclosure.

### DESCRIPTION OF REFERENCE NUMERALS

10, storage container; 20, dispensing container; 30, first non-contact sensor; 40, second non-contact sensor; 50, quantifier; 51, main body; 52, flow guide tube; 53, inlet; 54, outlet; 60, delivery tube; 70, peristaltic pump; 80, switch valve.

### PREFERRED EMBODIMENTS

To make the objectives, technical solutions, and advantages of the present disclosure clearer, the technical solutions of the present disclosure will be clearly and comprehensively described below in conjunction with the accompanying drawings. It is apparent that the described embodiments are a part of the embodiments of the present disclosure, not all embodiments. Based on the embodiments of the present disclosure, all other embodiments obtained by those of ordinary skill in the art without creative effort fall within the scope of protection of the present disclosure.

In the description of the embodiments of the present disclosure, it should be noted that unless otherwise explicitly specified and limited, the terms "connected" and "connection" should be broadly understood. For example, it can be a fixed connection, a detachable connection, or an integral connection; it can be a mechanical connection or an electrical connection; it can be directly connected or indirectly connected through an intermediate medium. For those skilled in the art, the specific meaning of the above terms in the embodiments of the present disclosure can be understood based on specific circumstances.

In the embodiments of the present disclosure, unless otherwise expressly specified and limited, the first feature being "on" or "under" the second feature may mean that the first and second features are in direct contact, or that the first and second features are indirectly in contact through an intermediate medium. Furthermore, the first feature being "above", "over", and "on top of" the second feature may mean that the first feature is directly above or diagonally above the second feature, or simply indicate that the first feature is at a higher level than the second feature. The first feature being "below", "under", and "underneath" the second feature may mean that the first feature is directly below or diagonally below the second feature, or simply indicate that the first feature is at a lower level than the second feature.

In the description of this specification, references to terms such as "an embodiment", "some embodiments", "example", "specific example", or "some examples" indicate that the specific features, structures, materials, or characteristics described in conjunction with the embodiment or example are included in at least one embodiment or example of the invention. In this specification, the illustrative expressions of the aforementioned terms do not necessarily refer to the same embodiment or example. Furthermore, the specific features, structures, materials, or characteristics described can be combined in any suitable manner in one or more embodiments or examples. Additionally, without contradicting each other, those skilled in the art can combine and mix different embodiments or examples described in this specification, as well as the features of different embodiments or examples.

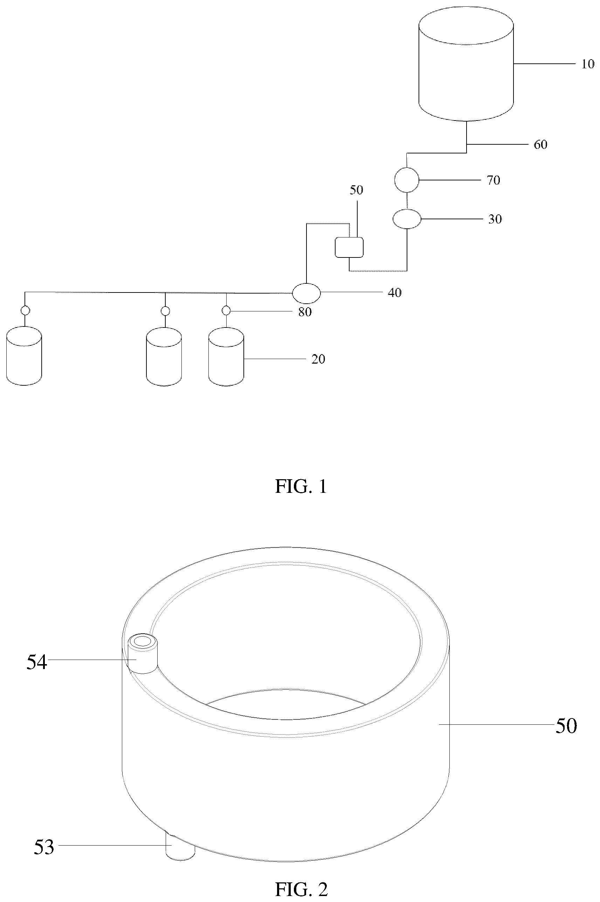

Embodiments of the present disclosure will be described below with reference to FIGS. 1 to 4. It should be understood that the following description merely represents illustrative embodiments of the present disclosure and does not in any way limit the present disclosure.

Referring to FIGS. 1 to 3, the present disclosure provides a quantitative dispensing device for biological agents. The biological agents include cell preparations, as well as biological products processed from microorganisms and effective antigen components thereof, animal toxins, human or animal blood or tissues, etc., for the prevention, treatment, and diagnosis of corresponding infectious diseases or other related diseases.

The quantitative dispensing device includes a storage container 10, a dispensing container 20, a first non-contact sensor 30, and a second non-contact sensor 40. The biological agents to be dispensed are stored inside the storage container 10. A liquid inlet of the dispensing container 20 communicates with a liquid outlet of the storage container 10 through a delivery tube 60. Both the first non-contact sensor 30 and the second non-contact sensor 40 are arranged on the delivery tube 60 and located between the liquid inlet of the dispensing container 20 and the liquid outlet of the storage container 10. Additionally, a preset distance is formed between the first non-contact sensor 30 and the second non-contact sensor 40.

That is, the first non-contact sensor 30 and the second non-contact sensor 40 are arranged on the delivery tube 60 and are separated by the preset distance, such that a volume of the delivery tube 60 between the first non-contact sensor 30 and the second non-contact sensor 40 can be determined. Therefore, an actual volume flow rate of the biological agents in the delivery tube 60 between the first non-contact sensor 30 and the second non-contact sensor 40 can be obtained by detecting and calculating a time difference between a time at which the biological agents pass by the first non-contact sensor 30 and a time at which the biological agents pass by the second non-contact sensor 40, and by using a volume flow rate relationship between the volume of the delivery tube 60 between the first non-contact sensor 30 and the second non-contact sensor 40 and the time difference. That is, the actual flow rate of the biological agents in the delivery tube 60 can be obtained. Furthermore, by controlling a flow time of the biological agents in the delivery tube 60, the non-contact quantitative dispensing of the biological agents can be achieved.

It is understandable that, in the present disclosure, with the first non-contact sensor 30 and the second non-contact sensor 40 arranged on the delivery tube 60 between the liquid inlet of the dispensing container 20 and the liquid outlet of the storage container 10, given the volume of the delivery tube 60 between the first non-contact sensor 30 and the second non-contact sensor 40, the actual volume flow rate of the biological agents in the delivery tube 60 between the first non-contact sensor 30 and the second non-contact sensor 40 can be obtained by detecting the time difference between the time at which the biological agents pass by the first non-contact sensor 30 and the time at which the biological agents pass by the second non-contact sensor 40. Thus, by controlling the flow time of the biological agents in the delivery tube 60, the dispensing of a predetermined volume of the biological agents, that is, the quantitative dispensing of the biological agents can be achieved.

As shown in FIGS. 1 to 3, in order to further improve the dispensing accuracy of the quantitative dispensing device for biological agents, based on the above embodiment, a quantifier 50 is provided on the delivery tube 60 between the first non-contact sensor 30 and the second non-contact sensor 40. The quantifier 50, as an independent component, has a certain structural strength and stability to facilitate the flow of the biological agents inside the quantifier 50 and the detection of the first and second non-contact sensors.

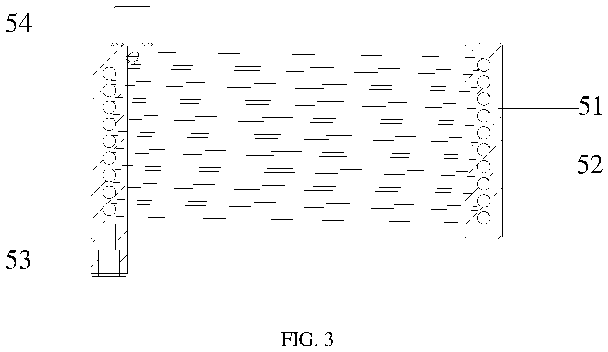

As shown in FIGS. 2 and 3, the quantifier 50 can be made of resin. The structure of the quantifier 50 can be set according to actual usage requirements. For example, the quantifier 50 can be shaped as a cylinder, a cube, a rectangular prism, or a sphere. When the quantifier 50 is shaped as a cylinder, a through hole can be formed at a middle position of the cylinder, such that a radial cross-section of the cylinder is circular, facilitating structural design of the quantifier 50.

In an embodiment, the quantifier 50 includes a main body 51. A flow guide tube 52 is arranged inside the main body 51, extending along a preset path. To facilitate the connection between the flow guide tube 52 and the delivery tube 60, the flow guide tube 52 includes an inlet 53 and an outlet 54. A length of the preset path is greater than a linear distance between the inlet 53 and the outlet 54. It can be understood that the preset path represents a tube flow path between the inlet 53 and the outlet 54. The preset path can be determined according to the requirements or the shape of the quantifier 50. The preset path is designed to extend the distance between the inlet 53 and the outlet 54 of the flow guide tube 52, thereby achieving accurate measurement of the actual volume flow rate of the biological agents.

As shown in FIG. 3, for facilitating the processing of the flow guide tube 52, the flow guide tube 52 can be arranged around a center line of the main body 51. That is, the flow guide tube 52 is arranged inside the main body 51 and arranged around the center line or a central axis of the main body 51. The flow guide tube 52 communicates with the delivery tube 60. Since the flow guide tube 52 is arranged inside the main body 51, the flow guide tube 52 can be a rigid tube that does not deform with the pressure from the circulating medium inside the flow guide tube 52. Therefore, the situation that the excessive liquid pressure in the delivery tube 60 causes the deformation of the delivery tube 60 can be avoided, which in turn can lead to changes in the flow rate of the biological agents in the delivery tube 60, resulting in low quantitative dispensing accuracy of the biological agents.

As shown in FIG. 3, to facilitate accurate calculation of the volumes of the flow guide tube 52 and the delivery tube 60, a cross-sectional area of the flow guide tube 52 can be set equal to a cross-sectional area of the delivery tube 60.

In some embodiments, the cross-sectional area of the flow guide tube 52 can be set to be different from the cross-sectional area of the delivery tube 60 based on actual usage conditions.

As shown in FIG. 3, in order to achieve more accurate dispensing of the biological agents, the inlet 53 of the flow guide tube 52 is arranged below the main body 51, and the outlet 54 of the flow guide tube 52 is arranged above the main body 51, such that the biological agents can enter the delivery tube 60 from below the quantifier 50 and flow out of the delivery tube 60 from above the quantifier 50, ensuring that the biological agents can fill the flow guide tube 52, thereby improving the calculation accuracy of the volume of the flow guide tube 52.

In addition, a connecting tube section can be arranged at an end of the delivery tube 60. Inner channel diameters of the inlet 53 and the outlet 54 are both set to be equal to an inner diameter of the delivery tube 60, and an inner diameter of the connecting tube section is set to be greater than the inner channel diameters of the inlet 53 and the outlet 54. Therefore, the delivery tube 60 can be interference-fitted onto the inlet 53 and the outlet 54 through the connecting tube section provided at the end of the delivery tube 60. The volume of the delivery tube 60 between the first non-contact sensor 30 and the second non-contact sensor 40 can be calculated according to a length and the inner diameter of the delivery tube 60 between the first non-contact sensor 30 and the second non-contact sensor 40.

Moreover, to enhance the sealing between the inlet 53 and the outlet 54 of the flow guide tube 52 and the delivery tube 60, the delivery tube 60 can be threadedly connected to the inlet 53 and the outlet 54 of the flow guide tube 52.

After the quantifier 50 is manufactured, the volume of the flow guide tube 52 is determined and remains unchanged. Therefore, when calculating the volume of the delivery tube 60 between the first non-contact sensor 30 and the second non-contact sensor 40, it is only necessary to calculate the volume of the delivery tube 60 between the inlet 53 of the quantifier 50 and the first non-contact sensor 30, as well as the volume of the delivery tube 60 between the outlet 54 of the quantifier 50 and the second non-contact sensor 40, allowing the delivery tube 60 to be used more conveniently.

In this embodiment, during the quantitative dispensing process, the storage container 10 can be positioned above the dispensing container 20, that is, a horizontal plane where the liquid outlet of the storage container 10 is located is higher than a horizontal plane where the liquid inlet of the dispensing container 20 is located. Such arrangement allows the biological agents stored in the storage container 10 to automatically enter the delivery tube 60 due to gravity. The biological agents move along the delivery tube 60; when the biological agents pass by the first non-contact sensor 30, the first non-contact sensor 30 detects the biological agents and records a first time of a first bubble detection signal. The biological agents continue to move along the delivery tube 60; when the biological agents pass by the second non-contact sensor 40, the second non-contact sensor 40 detects the biological agents and records a second time of a second bubble detection signal. The difference between the recorded second time and the first time is the time difference between the time at which the biological agents pass by the first non-contact sensor 30 and the time at which the biological agents pass by the second non-contact sensor 40.

Based on the aforementioned time difference and the volume of the delivery tube 60 between the first non-contact sensor 30 and the second non-contact sensor 40 (including the volume of the flow guide tube 52 and the volume of a portion of the delivery tube 60), the actual flow rate of the biological agents in the delivery tube 60 is obtained through the calculation formula for volume flow rate. Therefore, the actual volume of the biological agents in the dispensing container 20 can be obtained by calculating the time at which the biological agents in the delivery tube 60 pass by the first non-contact sensor 30 or the second non-contact sensor 40, thus achieving quantitative dispensing of the biological agents.

In some embodiments of the present disclosure, the delivery tube 60 between the first non-contact sensor 30 and the second non-contact sensor 40 can be arranged spirally to extend the flow path of the delivery tube 60 between the first non-contact sensor 30 and the second non-contact sensor 40, which is equivalent to extending a flow time of the biological agents in the delivery tube 60 between the first non-contact sensor 30 and the second non-contact sensor 40, such that a flow velocity of the biological agents in the delivery tube 60 can be prevented from being too fast, which may cause inaccurate detection of the biological agents by the first non-contact sensor 30 and the second non-contact sensor 40. Such configuration allows for a more accurate detection of the time difference between the time at which the biological agents pass by the first non-contact sensor 30 and the time at which the biological agents pass by the second non-contact sensor 40.

As shown in FIG. 1, in an embodiment of the present disclosure, the quantitative dispensing device further includes a pumping member for supplying a delivery power to the biological agents in the delivery tube 60, which allowing the flow velocity of the biological agents in the delivery tube 60 to be more stable and uniform. The pumping member can be arranged on any one of the delivery tube 60, the storage container 10, and the dispensing container 20.

In some embodiments, the pumping member can be a peristaltic pump 70, which can work like squeezing the delivery tube 60 filled with the biological agents with one's fingers; as the fingers slide forwards, the biological agents in the delivery tube 60 move forwards. Rollers in the peristaltic pump 70 pump the biological agents by alternately squeezing and releasing the delivery tube 60 fixed in the peristaltic pump 70.

In some embodiments, the peristaltic pump 70 can be arranged on the delivery tube 60 between the storage container 10 and the first non-contact sensor 30; in other embodiments, the peristaltic pump 70 can also be arranged on the delivery tube 60 between the dispensing container 20 and the second non-contact sensor 40.

To achieve more precise control of the peristaltic pump 70, the peristaltic pump 70 is arranged in front of the inlet 53 of the quantifier 50, that is, the peristaltic pump 70 is located on the delivery tube 60 between the storage container 10 and the first non-contact sensor 30.

In some embodiments, the pumping member can be an air pump arranged on the storage container 10. By increasing the pressure within the storage container 10, the air pump can facilitate the biological agents inside the storage container 10 to enter the delivery tube 60.

In some embodiments, the pumping member can be a vacuum pump arranged in the dispensing container 20. The vacuum pump evacuates the air inside the dispensing container 20 and thus allows the dispensing container 20 to be in a negative pressure state, thereby allowing the biological agents stored in the storage container 10 to enter the delivery tube 60.

In some embodiments, the quantitative dispensing device can include one dispensing container 20. After the biological agents are quantitatively dispensed into the dispensing container 20, the dispensing container 20 can be replaced by a next one to continue the quantitative dispensing of the biological agents.

As shown in FIG. 1, in other embodiments, the quantitative dispensing device can include multiple dispensing containers 20 arranged in parallel, and each dispensing container 20 includes a switch valve 80 arranged on the delivery tube 60 between the liquid inlet of the corresponding dispensing container 20 and the liquid outlet of the storage container 10.

The dispensing containers 20 are sequentially arranged as the first dispensing container, the second dispensing container, the third dispensing container...the N-th dispensing container. Each dispensing container 20 includes the switch valve 80 arranged on the delivery tube 60 at the liquid inlet of the dispensing container 20; that is, the first dispensing container corresponds to a first switch valve, and the N-th dispensing container corresponds to a N-th switch valve.

The portion of the delivery tube 60 between the liquid inlet of the first dispensing container and the liquid outlet of the storage container 10 is a main delivery tube, and the portion of the delivery tube 60 between the liquid inlet of the second, third...or the N-th dispensing container and the liquid outlet of the storage container 10 is an independent branch delivery tube, and the switch valves are arranged on the main delivery tube and each branch delivery tube respectively.

The switch valve 80 is an electromagnetic pinch valve (referred to as pinch valve), which is driven by an electromagnetic solenoid. The pinch valve controls the on/off of the delivery tube 60 by squeezing or releasing the delivery tube 60. The biological agents pass through the delivery tube 60 without contacting any component of the pinch valve, facilitating the non-contact quantitative dispensing of the biological agents.

In this embodiment, after the actual flow rate of the biological agents in the delivery tube 60 is obtained through the first non-contact sensor 30 and the second non-contact sensor 40, the flow rate of the peristaltic pump 70 can be calibrated to stabilize the flow rate of the biological agents in the delivery tube 60. Therefore, by controlling the time when the corresponding switch valve 80 is turned on, the actual volume of the biological agents dispensed into the dispensing container 20 can be indirectly determined, achieving quantitative dispensing of the biological agents.

In the embodiment of the present disclosure, both the first non-contact sensor 30 and the second non-contact sensor 40 are bubble sensors, which are used to detect bubbles in the delivery tube 60 in real time and thus provide feedback on the time at which the bubbles pass through the delivery tube 60.

The bubble sensor can be clamped onto the delivery tube 60 without cutting off the delivery tube 60, thus avoiding contamination of the dispensed biological agents and meeting the non-contact dispensing requirements of the biological agents. Moreover, the bubble sensor does not require an external power source and can operate using the 12V power source of the peristaltic pump 70. Thus, the bubble sensor can be operated more conveniently by engaging with peristaltic pump 70.

In an embodiment, the bubble sensor can detect the bubbles by infrared detection, capacitive detection, and ultrasonic detection. That is, the first non-contact sensor 30 and the second non-contact sensor 40 can be capacitive sensors, ultrasonic sensors, or separate photoelectric sensors.

In an embodiment, both the storage container 10 and the dispensing container 20 can be tubular or bag-type containers, such as liquid storage bags, liquid storage tubes, dispensing bags, and dispensing tubes. The delivery tube 60 is a flexible hose with elasticity, facilitating the delivery tube 60 to be clamped by the peristaltic pump 70 and the non-contact sensors.

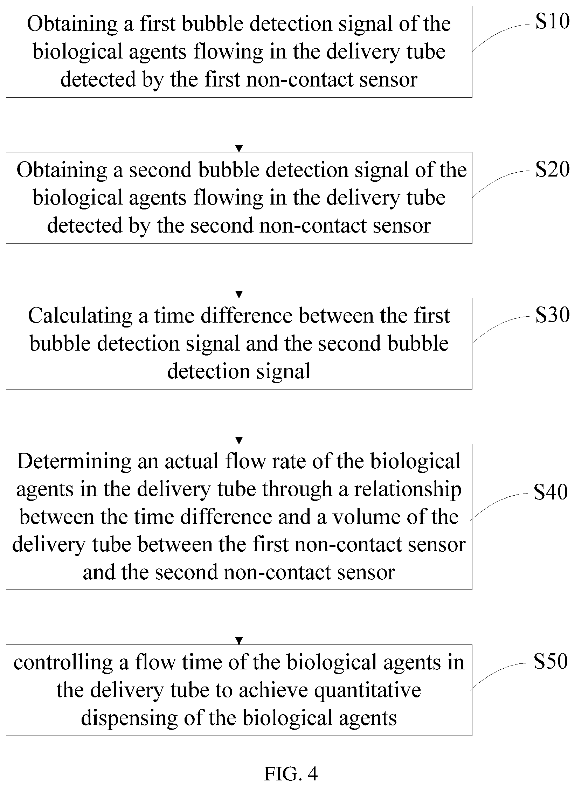

Referring to FIGS. 1 and 4, the present disclosure further provides a quantitative dispensing method for biological agents. The quantitative dispensing method can be implemented using the above quantitative dispensing device for biological agents, which may include the following components in the actual implementation environment: two bubble sensors of the same specification (i.e., the first bubble sensor and the second bubble sensor), the peristaltic pump 70, the quantifier 50 (with a given volume), several delivery tubes 60, and several dispensing bags, as well as several pinch valves corresponding to the dispensing bags respectively.

After the multiple dispensing bags are connected in parallel, the quantifier 50 is connected to the delivery tube 60 between the liquid inlet of the dispensing bag closest to the storage bag and the liquid outlet of the storage bag by connecting the delivery tube 60 to the liquid outlet of the storage bag, the two bubble sensors of the same specification are respectively clamped to the inlet 53 and the outlet 54 of the quantifier 50, the peristaltic pump 70 is arranged on the delivery tube 60 between the first bubble sensor and the storage bag, and the pinch valves are respectively clamped to each delivery tube 60 of the corresponding dispensing bag.

It should be noted that before dispensing the biological agents into the storage bag, the air in the dispensing bag and the delivery tube 60 is pumped into the storage bag using the peristaltic pump 70 to prevent excessive gas from occupying the volume of the dispensing bag or the delivery tube, thereby affecting the dispensing accuracy of the dispensing bag.

The quantitative dispensing method for biological agents includes steps as follows.

Step S10, obtaining a first bubble detection signal of the biological agents flowing in the delivery tube 60 detected by the first non-contact sensor 30.

After the flow rate of the peristaltic pump 70 is calibrated, the flow rate of the biological agents in the delivery tube 60 can be ensured to be stable. Under the pumping action of the peristaltic pump 70, the biological agents in the storage bag flow into the delivery tube 60, and then flow along the delivery tube 60 until passing by the first bubble sensor. The first bubble sensor generates the first bubble detection signal and transmits the first bubble detection signal to a controller for storage.

Step S20, obtaining a second bubble detection signal of the biological agents flowing in the delivery tube 60 detected by the second non-contact sensor 40.

The biological agents flow along the delivery tube 60 to pass by the first bubble sensor and enters the quantifier 50. After the flow guide tube 52 of the quantifier 50 is filled with the biological agents, the biological agents flow out of the quantifier 50 into another portion of the delivery tube 60 and pass by the second bubble sensor. The second bubble sensor generates the second bubble detection signal and transmits the second bubble detection signal to the controller for storage.

Step S30, calculating a time difference t between the first bubble detection signal and the second bubble detection signal.

The time difference t for the biological agents to flow through the entire quantifier 50 and a portion of the delivery tube 60 is calculated through the times stored in the controller at which the biological agents pass by the first bubble sensor and the second bubble sensor.

Step S40, determining an actual flow rate of the biological agents in the delivery tube 60 through a relationship between the time difference t and a volume of the delivery tube 60 (including the flow guide tube 52 and a portion of the delivery tube 60) between the first non-contact sensor 30 and the second non-contact sensor 40.

The volume of the delivery tube 60 between the first bubble sensor and the second bubble sensor is obtained by adding a volume of the quantifier 50, a volume of the delivery tube 60 between the inlet 53 of the quantifier 50 and the first bubble sensor, and a volume of the delivery tube 60 between the outlet 54 of the quantifier 50 and the second bubble sensor. An actual volume flow rate Q of the biological agents in the delivery tube 60 can be calculated by dividing the volume of the delivery tube 60 between the first bubble sensor and the second bubble sensor by the time difference t.

The volume flow rate of the present disclosure is expressed by the formula: Qv=V/t= u ×A (1-1).

Wherein V represents the volume flow rate per unit, t represents bit time, u represents an average flow velocity inside the tube, and A represents a cross-sectional area of the tube.

Step S50, controlling a flow time of the biological agents in the delivery tube 60 to achieve quantitative dispensing of the biological agents.

After the flow rate of the peristaltic pump 70 is calibrated, that is, the flow velocity of the biological agents in the delivery tube 60 is determined, the actual volume of the biological agents entering each dispensing bag is controlled by adjusting the on-off time of the pinch valve on the corresponding dispensing bag, thus achieving quantitative dispensing of the biological agents. The dispensing process is carried out sequentially from the first dispensing bag to the N-th dispensing bag.

In some embodiments of the present disclosure, in the step S50, the flow time of the biological agents in the delivery tube 60 is controlled by controlling the on-off time of the switch valve 80 at the liquid inlet of each dispensing container 20 under a preset rotational speed of the peristaltic pump 70, that is, under the stable flow velocity of the biological agents after the peristaltic pump 70 is calibrated, thereby achieving quantitative dispensing.

For example, the volume of the biological agents stored in the storage bag is 304 ml, and the biological agents need to be dispensed into 6 dispensing bags. The volume of the quantifier 50 is 5 ml, the rotational speed of the peristaltic pump 70 is 24 ml/min, the volume of the delivery tube 60 between the second bubble sensor and the liquid inlet of the sixth dispensing bag is 1.5 ml, and the volume of each branch delivery tube between the liquid inlet of each of the remaining dispensing bags and the main delivery tube is 0.5 ml.

Once the dispensing of the biological agents begins, the biological agents flow along the delivery tube 60, passing through the first bubble sensor and entering the quantifier 50. Once the flow guide tube 52 of the quantifier 50 is filled with the biological agents, the biological agents flow out of the quantifier 50 into another portion of the delivery tube 60 and passes through the second bubble sensor. The second bubble sensor generates the second bubble detection signal and transmits the second bubble detection signal to the controller for storage. The time difference between the second bubble detection signal and the first bubble detection signal is calculated to be 12 s. Using the volume flow rate formula, the actual flow velocity of the biological agents in the delivery tube 60 at this time is: 5 ml/12 s=25 ml/min.

If the volume of each dispensing bag is 50 ml, then the time required for dispensing the biological agents into the last, i.e., the sixth dispensing bag is: (50+1.5)/25=123.6 s, while the time required for dispensing the biological agents to each of the remaining 5 dispensing bags is: (50+0.5)/25=121.2 s.

In the present disclosure, the actual flow rate of the biological agents in the delivery tube 60 is measured according to the relationship between the time for the biological agents to flow through the quantifier 50 and the volume of the quantifier 50 using two bubble sensors of the same specification, and the actual flow rate is used to calibrate the rotational speed of the peristaltic pump 70. Subsequently, under the set flow rate of the peristaltic pump 70, that is, under the stable flow velocity of the biological agents in the delivery tube 60, the actual volume of the biological agents in the dispensing bag is determined by controlling the time for the biological agents to enter the dispensing bag, thus achieving non-contact dispensing of the biological agents.

It should be noted that the flow rate of the peristaltic pump 70 refers to the volume of the biological agents passing through the peristaltic pump 70 per unit time. The flow rate of the peristaltic pump 70 is directly proportional to the rotational speed thereof.

The present disclosure calibrates the rotational speed of the peristaltic pump 70 by combining two bubble sensors of the same specification with the quantifier 50 to measure the actual flow rate of the biological agents in the delivery tube 60, thereby improving the dispensing accuracy and efficiency of the biological agents.

The present disclosure indirectly measures the actual flow rate in the delivery tube 60 through the relationship between the volume of the biological agents in the delivery tube 60 and the time for the biological agents to flow through a preset length of the delivery tube 60, and calibrates the flow rate of the peristaltic pump 70 with the actual flow rate. With the actual flow rate in the delivery tube 60, quantitative dispensing of the biological agents is achieved by controlling the flow time of the biological agents in the delivery tube 60.

In addition, the quantitative dispensing method for biological agents provided by the present disclosure can avoid errors caused by vibration or shaking of the quantitative dispensing device during the dispensing process, achieving precise control of the dispensing volume of the biological agents. The quantitative dispensing device has no direct contact with the biological agents during the dispensing process, which avoids damage of the integrity and activity of the biological agents and has strong practicality.

It should be noted that the technical solutions in various embodiments of the present disclosure can be combined with each other, but the basis for such combination is that it should be achievable by those skilled in the art. When the combination of technical solutions is contradictory or unachievable, it should be considered that such combination of technical solutions does not exist, and thus does not fall within the scope of protection of the present disclosure.

Finally, it should be noted that the above descriptions are only optional embodiments of the application, and do not limit the scope of the patents of the present disclosure. All the equivalent structural transformations made by the content of the specification and drawings of the present application under the creative concept of the present disclosure, or directly/indirectly used in other related technical fields are all comprised in the protection scope of the patents of the present disclosure.

### Industrial applicability

The present disclosure provides the quantitative dispensing device and quantitative dispensing method for biological agents. The quantitative dispensing device includes the storage container, the dispensing container, the first non-contact sensor, and the second non-contact sensor. The biological agents are stored inside the storage container; the liquid inlet of the dispensing container communicates with the liquid outlet of the storage container through the delivery tube; both the first non-contact sensor and the second non-contact sensor are arranged on the delivery tube and located between the liquid inlet of the dispensing container and the liquid outlet of the storage container, and the first non-contact sensor and the second non-contact sensor are separated by the preset distance. By arranging the non-contact sensors on the delivery tube between the liquid inlet of the dispensing container and the liquid outlet of the storage container, the present disclosure can achieve non-contact quantitative dispensing of the biological agents, effectively improving the dispensing efficiency and accuracy of the biological agents, and has good economic value and application prospects.

## Claims

1. A quantitative dispensing device for biological agents, comprising:
a storage container with biological agents stored therein;
a dispensing container having a liquid inlet communicating with a liquid outlet of the storage container through a delivery tube; and
a first non-contact sensor and a second non-contact sensor arranged on the delivery tube and located between the liquid inlet of the dispensing container and the liquid outlet of the storage container, and the first non-contact sensor and the second non-contact sensor being separated by a preset distance.

2. The quantitative dispensing device according to claim 1, wherein a quantifier is arranged on the delivery tube between the first non-contact sensor and the second non-contact sensor.

3. The quantitative dispensing device according to claim 2, wherein the quantifier comprises a main body; a flow guide tube is arranged inside in the quantifier, the flow guide tube extends along a preset path, and a length of the preset path is greater than a distance between an inlet and and an outlet of the flow guide tube.

4. The quantitative dispensing device according to claim 3, wherein the flow guide tube is arranged around a center line of the main body and communicates with the delivery tube.

5. The quantitative dispensing device according to claim 4, wherein a cross-sectional area of the flow guide tube is equal to a cross-sectional area of the delivery tube.

6. The quantitative dispensing device according to claim 1, wherein the delivery tube between the first non-contact sensor and the second non-contact sensor is arranged spirally for extending a circulation path of the delivery tube.

7. The quantitative dispensing device according to claim 1, further comprising a pumping member for supplying a delivery power to the delivery tube, and the pumping member is arranged on any one of the delivery tube, the storage container, and the dispensing container.

8. The quantitative dispensing device according to claim 1, wherein a plurality of the dispensing containers are provided, the dispensing containers are arranged in parallel, and a switch valve is arranged on the delivery tube between the liquid inlet of each dispensing container and the liquid outlet of the storage container.

9. A quantitative dispensing method for biological agents, comprising:
obtaining a first bubble detection signal of the biological agents in a delivery tube detected by a first non-contact sensor;
obtaining a second bubble detection signal of the biological agents in the delivery tube detected by a second non-contact sensor;
calculating a time difference between the first bubble detection signal and the second bubble detection signal;
obtaining an actual volume flow rate of the biological agents in the delivery tube through a relationship between the time difference and a volume of the delivery tube between the first non-contact sensor and the second non-contact sensor; and
controlling a flow time of the biological agents in the delivery tube to achieve quantitative dispensing of the biological agents.

10. The quantitative dispensing method according to claim 9, wherein in the controlling a flow time of the biological agents in the delivery tube to achieve quantitative dispensing of the biological agents, an on-off time of a switch valve arranged at the liquid inlet of each dispensing container is controlled under a preset flow rate of a peristaltic pump.
